# EUROPÄISCHE PATENTSCHRIFT

(11) **EP 2 133 293 B1**
(45) Veröffentlichungstag und Bekanntmachung des Hinweises auf die Patenterteilung: **17.08.2011**
(21) Anmeldenummer: 08010473.0
(22) Anmeldetag: 09.06.2008
(51) Int. Cl.: B65G 47/31, B65G 47/08, B65B 5/10, B65B 5/08

(54) **Vorrichtung zur Übergabe von Packgut an ein Packguttransportsystem oder an eine Speichervorrichtung**
Device for transferring packaged items to a packaged item transport system or a storage device
Dispositif de transmission de marchandises sur un système de transport de marchandises ou sur un dispositif de stockage

(43) Veröffentlichungstag der Anmeldung: 16.12.2009
(73) Patentinhaber: Uhlmann Pac-Systeme GmbH & Co. KG, 88471 Laupheim (DE)
(72) Erfinder: Hähnel, Bernd, 76297 Stutensee (DE); Arb, Rudi, 88471 Laupheim (DE); Huchler, Joachim, 88484 Gutenzell (DE)
(74) Vertreter: Wächter, Jochen

(56) Entgegenhaltungen:
- EP-A- 1 602 584
- US-A- 3 409 115
- US-A- 4 506 493
- US-A- 4 864 801
- US-A- 5 123 231

## Beschreibung

Die vorliegende Erfindung betrifft eine Vorrichtung zur Übergabe von Packgut an ein Packguttransportsystem oder an eine Speichervorrichtung.

Derartige Vorrichtungen dienen beispielsweise zur Übergabe von Blistern an eine Transportkette eines Kartonierers. Aus der US 6,092,979 ist eine Vorrichtung zur Übergabe von Blistern an eine bewegte Blistertransportkette gezeigt, bei der die Blister in zwei parallelen Linien auf zwei getrennten Förderbändern transportiert werden. Eine Aufnahmeeinheit nimmt dabei die zunächst in parallelen Reihen angeordneten Blister auf und bildet auf jedem Transportband einen Stapel von zwei übereinanderliegenden Blistern, wobei die einzelnen Stapel beabstandet zueinander angeordnet sind und die Stapel eines Förderbandes versetzt zu den Stapeln des anderen Förderbandes angeordnet sind. Schließlich werden die Blisterstapel mittels eines Schiebers quer zur Transportrichtung der Förderbänder zu einer Linie zusammengeschoben, sodass eine Reihe von eng aufeinanderfolgenden Blisterstapeln auf einem Transportband weiterbefördert wird. Eine solche Vorrichtung unterliegt erheblichen Einschränkungen hinsichtlich der Weiterbearbeitung der Blisterstapel, da sie lediglich in Förderrichtung der beiden Transportbänder weiterbefördert werden können. Schließlich nimmt eine solche Vorrichtung auch relativ viel Platz ein.

Eine ähnliche Vorrichtung ist aus der WO 00/68086 bekannt, in der einzelne Blister, welche in parallelen Reihen angeordnet sind, von einer Aufnahmeeinheit wiederum versetzt zueinander auf zwei Transportbändern abgelegt werden. Die Transportbänder arbeiten dabei getaktet, und die Blister werden aus ihren Kassetten in Richtung einer zwischen den beiden Transportbändern befindlichen Transportvorrichtung ausgeschoben, wodurch eine Linie mit eng aneinander liegenden Blistern auf dieser Transportvorrichtung erzeugt wird. Allerdings ist auch hier lediglich eine Weiterförderung der Blister in Transportrichtung der Förderbänder möglich und die Vorrichtung benötigt relativ viel Platz.

Aus der EP 1 602 584 A1 ist eine Vorrichtung bekannt, bei der die einzelnen Blister mittels eines Saugbandes parallel zur Bewegungsrichtung des Packguttransportsystems vereinzelt herangeführt werden und in einem Kassettenmodul einer Übergabeeinheit stapelweise abgelegt werden. Das Kassettenmodul ist wiederum synchron zum Packguttransportsystem bewegbar, wobei während der parallelen Bewegung die Blisterstapel mittels Schiebern in die einzelnen Aufnahmen des Packguttransportsystems eingeschoben werden. Anschließend fährt das Kassettenmodul wieder zur Ausgangsstellung zurück, wo es erneut durch das Saugband mit Blistern befüllt wird. Die Vorrichtung ist mechanisch kompliziert, benötigt viel Platz aufgrund der Bewegung des Kassettenmoduls und ermöglicht lediglich eine Befüllung von speziellen Packguttransportvorrichtungen.

Die US 5 123 231, welche als nächstkommender Stand der Technik angesehen wird, beschreibt eine Vorrichtung gemäß dem Oberbegriff des Anspruchs 1 und ein Verfahren zur Sammlung von Produkten in Gruppen und zum Verpacken dieser Gruppen in Behältern. Die Vorrichtung umfasst hierzu bis zu drei aneinander anschließende Förderbänder, die mit unterschiedlicher Geschwindigkeit betrieben werden können. Dadurch ist es möglich, Gruppen von zuvor bestimmter Größe anzusammeln. Diese Gruppen werden durch ein letztes Transportmittel, in der Regel ein oszillierendes Förderband, bis zu einem Schacht befördert und auf dessen Oberseite nebeneinander positioniert. Sind alle Produkte an ihrem Platz, öffnen sich zwei Klappen des Schachts nach unten und die Produkte fallen in die vorgesehenen Behälter.

Es ist daher die Aufgabe der vorliegenden Erfindung, eine Vorrichtung zur Übergabe von Packgut an ein bewegtes Packguttransportsystem oder an eine Speichervorrichtung zu schaffen, die wenig Platz einnimmt und mit nahezu jeder beliebigen im Anschluss daran angeordneten Vorrichtung zum Weitertransport der Blister kombinierbar ist.

Diese Aufgabe wird durch die Merkmale des Anspruchs 1 gelöst.

Erfindungsgemäß weist die Vorrichtung zur Übergabe von Packgut an ein Packguttransportsystem oder an eine Speichervorrichtung eine Zuführeinheit zum Aufnehmen und Fördern von mehreren Packgutstücken auf, wobei die Zuführeinheit geeignet ist, die Packgutstücke in mindestens einer Linie bereitzustellen. Außerdem weist die Vorrichtung eine Übergabestation auf, welche zur kurzfristigen Zwischenlagerung der Packgutstücke und zur Übergabe der Packgutstücke an ein Packguttransportsystem oder an eine Speichervorrichtung dient, wobei die Übergabestation mindestens eine Ablagelinie mit mehreren Ablageflächen zur Aufnahme der von der Zuführeinheit bereitgestellten Packgutstücke aufweist. In einer Ablagelinie der Übergabestation weisen die Ablageflächen zu öffnende Klappen auf.

Die Übergabestation weist mindestens eine weitere Ablagelinie zur Aufnahme der von der Zuführeinheit bereitgestellten Packgutstücke auf, wobei ein Schieber in der Übergabestation angeordnet ist, der zum Verschieben der Packgutstücke in Richtung der Ablagelinie dient, welche mit den Klappen ausgestattet ist Vorzugsweise liegen die Ablageflächen mit den Klappen tiefer als die Ablageflächen der anderen Ablagelinien. Dadurch wird eine Stapelung der Packgutstücke in den tiefer liegenden Ablageflächen möglich, wodurch die Übergabestation einerseits als Zwischenspeicher dienen kann und andererseits bereits gestapelte Blister zur weiteren Bearbeitung abgegeben werden können.

Damit wird eine stationäre Zwischenlagerung geschaffen, welche wenig Platz beansprucht und mit nahezu jeder beliebigen Art von Packguttransportsystem oder Speichervorrichtung, an die die Packgutstücke von der Übergabestation abgegeben werden, verwendet werden kann. Dabei ist die Übergabe der Packgutstücke kaum störanfällig.

Vorzugsweise weist jede Ablagefläche zwei Klappen auf, welche sich gegenläufig öffnen, wodurch der Übergabevorgang schnell und auf gesteuerte Weise durchgeführt werden kann.

Dabei öffnen sich die Klappen vorzugsweise in Richtung der schmaleren Seiten der Ablagefläche. Dies stellt ein sicheres Durchfallen der Packgutstücke nach unten ohne Verdrehung sicher.

Im Sinne einer variablen Programmierbarkeit des Bewegungsvorgangs ist ein Servomotor vorgesehen, welcher zum gesteuerten Antrieb aller Klappen dient.

Es kann auch vorteilhaft sein, dass die Zuführeinheit geeignet ist, die Packgutstücke in mindestens zwei parallelen Linien, aber zwischen den einzelnen Linien versetzt zueinander bereitzustellen. Hierdurch wird der Durchsatz der Vorrichtung weiter erhöht.

Stromaufwärts der Zuführeinheit ist vorzugsweise eine Ausgabevorrichtung vorgesehen, welche die Packgutstücke vereinzelt und in mindestens einer Reihe senkrecht zur Förderrichtung der Zuführeinheit bereitstellt. Damit wird eine simultane Befüllung der Zuführeinheit in hoher Taktung gewährleistet.

Vorzugsweise weist die Zuführeinheit mindestens ein umlaufendes Saugband auf. Ein solches Saugband ist insbesondere für Blister geeignet und kann diese auf mechanisch einfache Weise fördern.

Die Zuführeinheit weist vorzugsweise mehrere Sauggreifer zum Aufnehmen der Packgutstücke und zum Übergeben derselben an das mindestens eine Saugband auf. Somit ist eine gleichzeitige Aufnahme mehrerer Packgutstücke und eine sichere Übergabe an das Saugband gewährleistet.

Die Zuführeinheit umfasst vorzugsweise mindestens zwei Kombinationen aus jeweils einem Stopper und einem Abschläger, wobei jeweils eine Kombination einer Linie der Zuführeinheit zugeteilt ist, und wobei die jeweils aktiven Kombinationen verschiedener Linien in Förderrichtung der Zuführeinheit vorzugsweise versetzt zueinander angeordnet sind. Damit wird eine versetzte Anordnung der Blister in Förderrichtung des Saugbandes zwischen den einzelnen Linien der Zuführeinheit gewährleistet, wobei die Stopper zum Festhalten der Blister dienen und die Abschläger die Blister von der Zuführeinheit lösen, woraufhin diese nach unten fallen. Auf diese Weise wird eine Entkopplung der zunächst in parallelen Reihen herangeführten Blister zu versetzt angeordneten Blistern möglich. Ebenso können die Kombinationen von Stoppern und Abschlägern in einer Reihe über mehrere Linien angeordnet sein, oder es kann nur eine Linie der Zuführeinheit vorliegen, welche mehrere Kombinationen von Stoppern und Abschlägern umfasst.

Um ein frühzeitiges Herunterfallen der Blister vom Saugband zu verhindern, weist die Zuführeinheit vorzugsweise im Bereich der Stopper Saugbohrungen auf, welche die Blister so lange festhalten, bis alle versetzt zueinander angeordneten Kombinationen von Stoppern und Abschlägern mit einem Blister befüllt sind.

Im Sinne einer sicheren und individuell programmierbaren Steuerung des Schiebevorgangs ist zum gesteuerten Antrieb des Schiebers ein Servomotor vorgesehen.

Zur weiteren Erhöhung des Durchsatzes ist die Zuführeinheit geeignet, die Packgutstücke in mindestens drei parallelen Linien bereitzustellen, und die Übergabestation weist mindestens drei parallele Ablagelinien auf. Die Umstellung vom Betrieb mit einer Linie zum Betrieb mit zwei Linien oder drei Linien und umgekehrt kann jederzeit ohne großen Aufwand erfolgen.

Es ist vorteilhaft, dass der Schieber derart gestaltet ist, dass er die Packgutstücke gleichzeitig von zwei Seiten in Richtung der Ablagelinie mit den Klappen verschiebt. Hierdurch kann der Verschiebevorgang der Packgutstücke vereinfacht und verkürzt werden.

Die Übergabestation weist im Bereich der Ablageflächen vorzugsweise schwenkbare Rückhalteelemente für die Packgutstücke auf, um ein Zurückspringen der auf die Ablageflächen gefallenen Packgutstücke zu verhindern. Dies ist insbesondere bei Blistern sinnvoll, welche durch ihr Eigengewicht die Rückhalteelemente zunächst zur Seite drehen und anschließend von den wieder in die Ausgangsstellung zurückgelangten Rückhalteelementen an einer Bewegung nach oben gehindert werden.

Weitere Einzelheiten, Merkmale und Vorteile der vorliegenden Erfindung ergeben sich aus der nachfolgenden detaillierten Beschreibung unter Bezugnahme auf die Zeichnungen.
- Fig. 1: zeigt eine Perspektivansicht einer bevorzugten Ausführungsform der erfin- dungsgemäßen Vorrichtung zur Übergabe von Packgut an ein Packgut- transportsystem oder an eine Speichervorrichtung;
- Fig. 2: zeigt eine Ansicht von unten einer als Saugband mit drei parallelen Linien ausgebildeten Zuführeinheit;
- Fig. 3: zeigt eine Draufsicht auf eine Übergabestation mit drei Ablagelinien, wobei die mittlere Ablagelinie die Ablageflächen mit zu öff- nenden Klappen aufweist;
- Fig. 4: zeigt die Übergabestation aus Fig. 3 nach dem Verschieben der Blister in die zentrale Ablagelinie; und

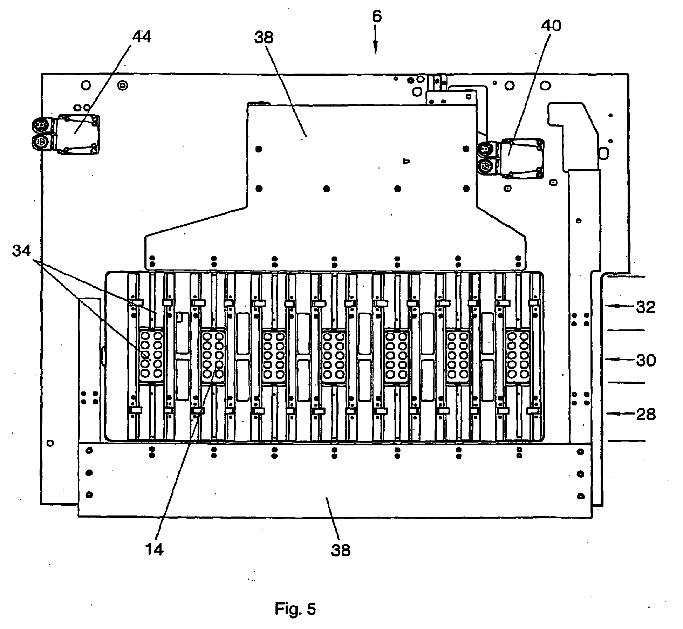

- Fig. 5: zeigt die Übergabestation auf Fig. 3 und 4 in einem Zustand unmittelbar vor der Aufnahme weiterer Blister in der Übergabestation.

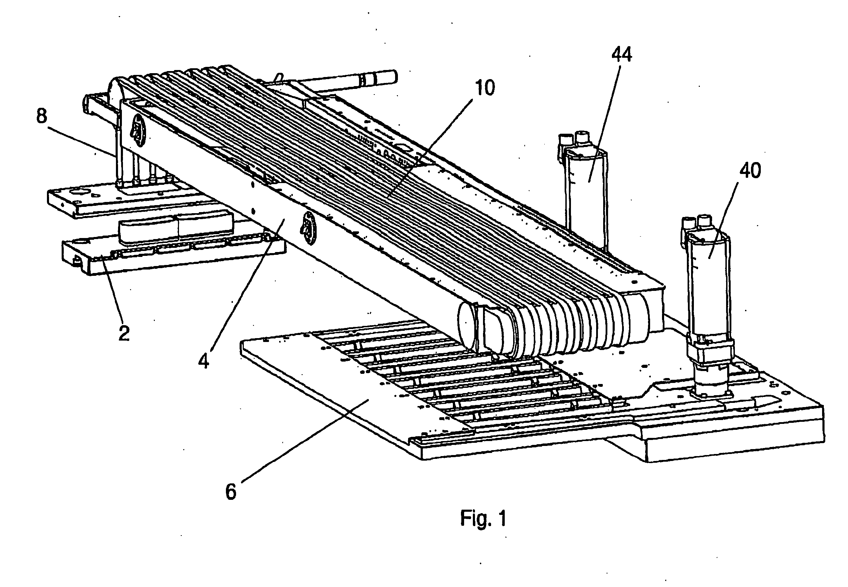

In Fig. 1 sind die Hauptkomponenten einer erfindungsgemäßen Vorrichtung zur Übergabe von Packgut an ein Packguttransportsystem oder an eine Speichervorrichtung dargestellt. Im vorliegenden Beispielsfall ist die Vorrichtung auf eine Übergabe von Blistern ausgelegt, die aus Blisterbögen ausgestanzt werden und durch die Ausgabevorrichtung 2 einer Stanze bereitgestellt werden. Von der Ausgabevorrichtung 2 bereitgestellte Blister werden über eine Zuführeinheit 4 zu einer Übergabestation 6 gefördert und auf dieser abgelegt.

Im dargestellten Beispielsfall umfasst die Zuführeinheit 4 mehrere Sauggreifer 8, welche zur Aufnahme der von der Stanze 2 bereitgestellten Blister dienen und diese nach oben in Richtung eines Saugbandes 10 bewegen. Das Saugband 10 besteht aus einer Mehrzahl parallel nebeneinander angeordneter Transportriemen 12, welche jeweils in einer Reihe quer zur Förderrichtung des Saugbandes 10 angeordnete Saugpunkte (nicht dargestellt) aufweisen, an denen die von den Sauggreifern 8 an das Saugband 10 gehobenen Blister in Reihe nebeneinander festgesaugt werden. Die Transportriemen 12 sind als umlaufende Riemen ausgebildet und bewegen sich mit konstanter Geschwindigkeit.

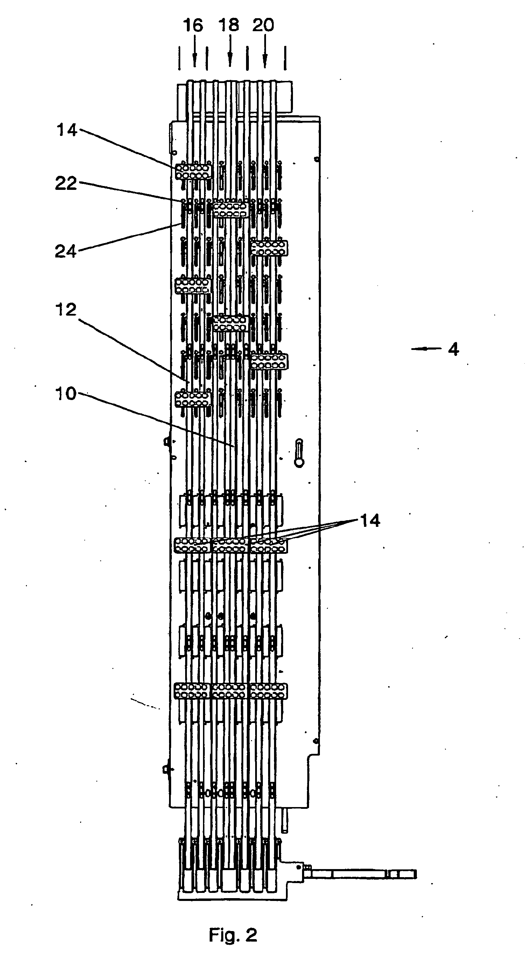

Wie aus Fig. 2 ersichtlich ist, hängen die Packgutstücke 14, hier Blister, mit ihren Näpfen nach unten an den Saugpunkten der Transportriemen 12 und bilden eine Reihe nebeneinander angeordneter Blister 14. Dabei können ein oder mehrere Transportriemen 12 eine Förderlinie 16, 18, 20 für den Transport jeweils eines Blisters 14 bilden, ebenso kann auch ein durchgängiges Saugband 10 gleichzeitig für den Transport der Blister 14 in mehreren Linien 16, 18, 20 sorgen. Im dargestellten Beispielsfall sind drei Linien 16, 18, 20 der Zuführeinheit 4 parallel zueinander angeordnet, es sind aber auch eine einzige Linie, zwei parallele Linien oder mehr als drei Linien möglich.

Weiter in Förderrichtung der Zuführeinheit 4 sind Stopper 22 und Abschläger 24 im Bereich des Saugbandes 10 angeordnet, um die durch das Saugband 10 geförderten Blister 14 am Weitertransport zu hindern und diese vom Saugband 10 nach unten abzuschlagen. Dabei sind die Stopper 22 und Abschläger 24 vorzugsweise jeweils in Kombination in Reihen und Spalten in Form einer Matrix an verschiedenen Stellen des Saugbandes 10 verteilt. Vorzugsweise sind die aktiven Kombinationen von Stoppern 22 und Abschlägern 24 der einzelnen Linien 16, 18, 20 jeweils versetzt zueinander angeordnet, sodass die ursprünglich in einer Reihe nebeneinander durch das Saugband 10 geförderten Blister 14 in versetzt zueinander angeordneten Positionen von den Stoppern 22 angehalten werden. In einer Linie 16, 18, 20 können hintereinander mehrere Kombinationen von Stoppern 22 und Abschlägern 24 vorgesehen sein. Die Stopper 22 sind vorzugsweise mittels einer Steuerung hin- und herbeweglich ausgestaltet, um aus dem Förderweg der geförderten Blister 14 herausbefördert und wieder zurückbewegt werden zu können. Aufgrund der versetzten Anordnung der aktiven Kombinationen von Stoppern 22 und Abschlägern 24 in den verschiedenen Linien 16, 18, 20 werden die Blister 14 in den einzelnen Linien 16, 18, 20 zu unterschiedlichen Zeitpunkten am Stopper 22 anschlagen. In einer einfachen Ausführungsform mit nur einer Linie 16, 18, 20 liegen mehrere Stopper 22 auf dieser Linie vor.

Da sich die Transportriemen 12 des Saugbandes 10 mit kontinuierlicher Geschwindigkeit weiterbewegen und somit die Saugpunkte des Saugbandes 10 den am ersten Stopper 22 anliegenden Blister 14 verlassen, wird dieser nicht mehr am Saugband 10 festgehalten und es ist notwendig, dass die Blister 14 anderweitig an einem frühzeitigen Hinabfallen gehindert werden. Hierzu weist die Zuführeinheit im Bereich der Stopper 22 vorzugsweise Saugbohrungen auf, die geeignet sind, die Blister 14 so lange festzuhalten, bis der jeweilige Abschläger 24 in Aktion tritt. Dies ist dann der Fall, wenn alle Kombinationen von Stopper 22 und Abschläger 24 mit Blistern 14 befüllt sind. Das Abschlagen erfolgt dann vorzugsweise gleichzeitig, und die Kombinationen aus Stoppern 22 und Abschlägern 24 sind wieder zur Aufnahme der nächsten Blister 14 bereit.

Wenn eine große Anzahl von Kombinationen von Stoppern 22 und Abschlägern 24 über einen längeren Abschnitt der Zuführeinheit 4 in einer Matrix angeordnet sind, wie es in Fig. 2 dargestellt ist, kann die Umstellung auf andere Formate bzw. eine andere Anzahl von Linien besonders einfach erfolgen. Es ist dann jederzeit möglich, eine Zuführeinheit 4 mit drei Linien auf eine Verwendung mit zwei Linien umzustellen und umgekehrt, indem die Stopper 22 und Abschläger 24 anders angesteuert werden. Ebenso kann auf einfache Weise eine Formatanpassung hinsichtlich der Blister 14 erfolgen.

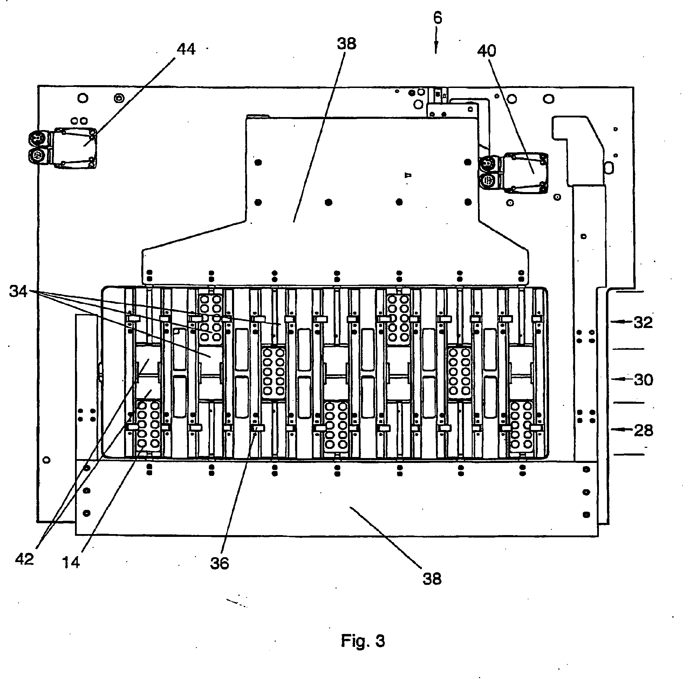

In Fig. 3 ist eine bevorzugte Ausführungsform einer stationären Übergabestation 6 gemäß der vorliegenden Erfindung dargestellt. Die Übergabestation 6 umfasst drei Ablagelinien 28, 30, 32, die der jeweiligen Anzahl von Linien 16, 18, 20 der Zuführeinheit 4 entsprechen und unterhalb der Zuführeinheit 4 angeordnet sind. Auch hier kann die Anzahl der Ablagelinien variiert werden. Jede Ablagelinie 28, 30, 32 umfasst mehrere beabstandet zueinander angeordnete Ablageflächen 34 zur Aufnahme der von der Zuführeinheit 4 bereitgestellten und abgegebenen Blister 14. Jede Ablagefläche 34 entspricht im Wesentlichen der Form der Blister 14 und besitzt niedrige Umrandungen zur Fixierung der Lage der Blister 14. Im Falle der Übergabe von Blistern 14 sind vorzugsweise jeder Ablagefläche 34 an ihren längsseitigen Umrandungen zwei sich gegenüberliegende nach unten schwenkbare Rückhalteelemente 36 für die Blister 14 angeordnet. Diese Rückhalteelemente 36 werden vom auftreffenden Blister 14 aus dem Weg geschwenkt, stellen sich aufgrund einer Federkraft wieder in ihre Ausgangsstellung zurück und verhindern dann ein Zurückspringen des Blisters 14 nach oben. Alternativ zu den Rückhalteelementen 36 kann auch gezielt Blasluft von oben eingesetzt werden.

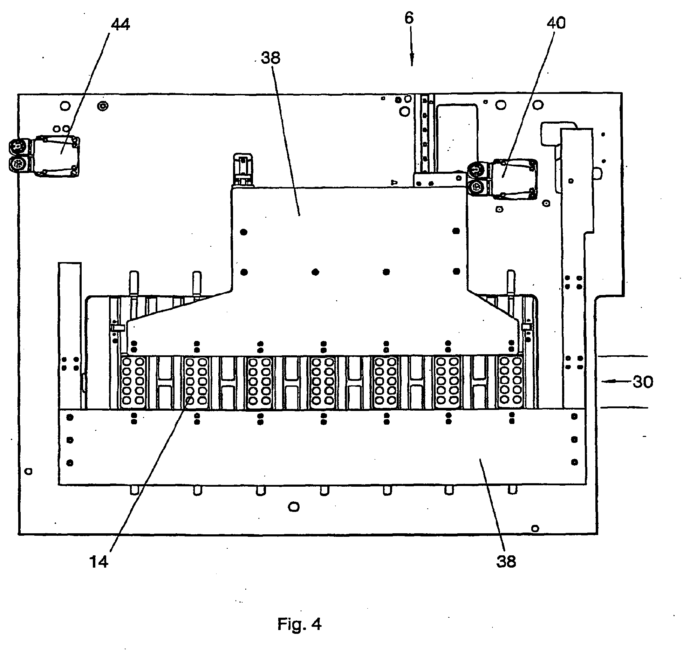

Eine Ablagelinie, im dargestellten Beispielsfall die mittlere Ablagelinie 30, kann mit tiefer liegenden Ablageflächen 34 ausgestattet sein, um ein Stapeln von mehreren Blistern 14 übereinander in dieser Ablagelinie 30 zu gewährleisten. Diese Ablagelinie 30 kann somit auch als Zwischenspeicher dienen. Ein Schieber 38, welcher über einen Servomotor 40 angesteuert ist, schiebt nun die Blister 14 aus den verschiedenen Ablagelinien 28, 30, 32 zu einer Ablagelinie zusammen, im dargestellten Beispielsfall der mittleren Ablagelinie 30 (siehe Fig. 4). Hierzu ist der Schieber 38 derart ausgestaltet, dass er von beiden Seiten gleichmäßig die Blister 14 aus den äußeren beiden Ablagelinien 28 und 32 in Richtung der mittleren Ablagelinie 30 schiebt, bis diese auf den dortigen Ablageflächen 34 zu liegen kommen. Der Endzustand des Schiebevorgangs ist in Fig. 4 dargestellt.

Wie am besten aus Fig. 3 ersichtlich ist, besitzt erfindungsgemäß eine Ablagelinie, im dargestellten Beispielsfall die mittlere Ablagelinie 30, Ablageflächen 34, welche zu öffnende Klappen 42 aufweisen. Im dargestellten Beispielsfall sind pro Ablagefläche 34 jeweils zwei Klappen 42 vorgesehen, die sich gegenläufig in Richtung der schmaleren Seiten der Ablagefläche 34 hin öffnen. Ein Servomotor 44 dient zum gesteuerten Antrieb der Klappen 42. Ebenso ist es denkbar, die Klappen 42 zur breiteren Seite der Ablagefläche 34 hin zu öffnen oder mindestens eine nach unten schwenkbare Klappe 42 pro Ablagefläche 34 vorzusehen. Das dargestellte Ausführungsbeispiel besitzt jedoch den Vorteil, dass ein Verdrehen der Blister 14 beim Hinabfallen sicher verhindert wird.

Die durch die geöffneten Klappen 42 fallenden Blister 14 werden entweder unmittelbar in einem Packguttransportsystem (nicht dargestellt) aufgenommen oder einer zwischengeschalteten Speichervorrichtung (ebenfalls nicht dargestellt) zugeführt.

Die erfindungsgemäße Vorrichtung zur Übergabe von Packgut an ein Packguttransportsystem oder an eine Speichervorrichtung arbeitet folgendermaßen. Zunächst werden die von der Ausgabevorrichtung 2 bereitgestellten Blister 14 durch die Sauggreifer 8 nach oben gehoben und an das Saugband 10 übergeben. Dort werden die parallelen Reihen von Blistern 14 so weit transportiert, bis ein Blister 14 in einer ersten Linie 16 an einem Stopper 22 anschlägt. Die übrigen Blister 14 in den anderen Linien 18, 20 werden durch die kontinuierlich laufenden Transportriemen 12 weiterbewegt, bis auch diese jeweils an zugehörigen Stoppern 22 anschlagen. Die Blister 14 werden dabei im Bereich der Stopper 22 mittels Saugbohrungen der Zuführeinheit 4 festgehalten, bis alle gewünschten Abschlagpositionen mit Blistern 14 belegt sind und die Abschläger 24 die Blister vom Saugband 10 nach unten drücken. Die Blister 14 fallen nach unten und landen auf den Ablageflächen 34, welche dem Blisterformat entsprechen und in ebenso vielen Ablagelinien 28, 30, 32 angeordnet sind, wie Linien 16, 18, 20 in der Zuführeinheit 4 vorgesehen sind.

Im Anschluss daran werden die Blister 14 aus den Ablagelinien 28, 30, 32 auf eine Ablagelinie 30 verschoben, wo sie entweder unmittelbar durch Öffnen der Klappen 42 nach unten abgegeben werden oder auf eine weitere Lage von Blistern 14 warten, die auf der ersten Lage abgelegt wird. Nach dem Öffnen der Klappen 42 und der damit vorgenommenen Übergabe der Blister 14 oder der Blisterstapel an ein Packguttransportsystem oder an eine Speichervorrichtung kann der Zyklus wieder von vorne beginnen.

Es können verschiedenste Modifikationen des hier genannten Beispielfalls vorgenommen werden. Im dargestellten Beispielsfall werden Blister von der Vorrichtung übergeben, es können aber als Packgutstücke 14 ebenso andere pharmazeutische Produkte wie Vials, Ampullen, Flaschen, Schlauchbeutel etc. übergeben werden, wenn die Zuführeinheit 4 angepasst wird und mit entsprechenden Saug-/Greifvorrichtungen anstelle des Saugbandes arbeitet. Ebenso ist es möglich, die Packgutstücke 14 auf den Ablagelinien 28, 30, 32 lediglich von einer Seite aus zu verschieben, um eine Reihe von Packgutstücken in einer äußeren Ablagelinie 28 bzw. 32 zu erzeugen. Die Verschiebungsrichtung der Packgutstücke 14 auf den Ablagelinien 28, 30, 32 kann nicht nur, wie bislang dargestellt, in einer Richtung quer zur Förderrichtung der Zuführeinheit 4 erfolgen, sondern auch parallel hierzu. Dadurch würden die einzelnen Packgutstücke 14 nach dem Verschieben in einer Ablagelinie vorliegen, welche quer zur Förderrichtung der Zuführeinheit 4 orientiert ist.

Wie bereits oben erläutert wurde, sind die Anzahl von Linien, in denen die Packgutstücke versetzt zueinander transportiert werden, sowie die Anzahl der Ablagelinien optional. Je größer die Anzahl der Linien, desto höher ist der Durchsatz.

## Patentansprüche

1. Vorrichtung zur Übergabe von Packgut an ein Packguttransportsystem oder an eine Speichervorrichtung, mit
einer Zuführeinheit (4) zum Aufnehmen und Fördern von mehreren Packgutstücken (14), wobei die Zuführeinheit (4) geeignet ist, die Packgutstücke (14) in mindestens einer Linie (16, 18, 20) bereitzustellen; und
einer Übergabestation (6), welche zur kurzfristigen Zwischenlagerung der Packgutstücke (14) und zur Übergabe der Packgutstücke (14) an ein Packguttransportsystem oder an eine Speichervorrichtung dient, wobei die Übergabestation (6) eine Ablagelinie (30) mit mehreren Ablageflächen (34) zur Aufnahme der von der Zuführeinheit (4) bereitgestellten Packgutstücke (14) aufweist, wobei die Ablageflächen (34) zu öffnende Klappen (42) aufweisen;
**dadurch gekennzeichnet, dass**
die Übergabestation (6) mindestens eine weitere Ablagelinie (28, 32) zur Aufnahme der von der Zuführeinheit (4) bereitgestellten Packgutstücke (14) aufweist, wobei ein Schieber (38) in der Übergabestation (6) angeordnet ist, der zum Verschieben der Packgutstücke (14) in Richtung der Ablagelinie (30) dient, welche mit den Klappen (42) ausgestattet ist.

2. Vorrichtung nach Anspruch 1, **dadurch gekennzeichnet, dass** jede Ablagefläche (34) zwei Klappen (42) aufweist, welche sich gegenläufig öffnen.

3. Vorrichtung nach Anspruch 2, **dadurch gekennzeichnet, dass** sich die Klappen (42) in Richtung der schmaleren Seiten der Ablagefläche (34) hin öffnen.

4. Vorrichtung nach einem der vorangehenden Ansprüche, **dadurch gekennzeichnet, dass** ein Servomotor (44) vorgesehen ist, welcher zum gesteuerten Antrieb aller Klappen (42) dient.

5. Vorrichtung nach einem der vorangehenden Ansprüche, **dadurch gekennzeichnet, dass** die Ablageflächen (34) mit den Klappen (42) tiefer liegen als die Ablageflächen (34) der anderen Ablagelinien (28, 32).

6. Vorrichtung nach einem der vorangehenden Ansprüche, **dadurch gekennzeichnet, dass** die Zuführeinheit (4) geeignet ist, die Packgutstücke (14) in mindestens zwei parallelen Linien (16, 18, 20), aber zwischen den einzelnen Linien (16, 18, 20) versetzt zueinander bereitzustellen.

7. Vorrichtung nach einem der vorangehenden Ansprüche, **dadurch gekennzeichnet, dass** stromaufwärts der Zuführeinheit (4) eine Ausgabevorrichtung (2) vorgesehen ist, welche die Packgutstücke (14) vereinzelt und in mindestens einer Reihe senkrecht zur Förderrichtung der Zuführeinheit (4) bereitstellt.

8. Vorrichtung nach einem der vorangehenden Ansprüche, **dadurch gekennzeichnet, dass** die Zuführeinheit (4) mindestens ein umlaufendes Saugband (10) aufweist.

9. Vorrichtung nach Anspruch 8, **dadurch gekennzeichnet, dass** die Zuführeinheit (4) mehrere Sauggreifer (8) zum Aufnehmen der Packgutstücke (14) und zum Übergeben derselben an das mindestens eine Saugband (10) aufweist.

10. Vorrichtung nach Anspruch 8 oder 9, **dadurch gekennzeichnet, dass** die Zuführeinheit (4) mindestens zwei Kombinationen aus jeweils einem Stopper (22) und einem Abschläger (24) aufweist, wobei jeweils eine Kombination einer Linie (16, 18, 20) zugeordnet ist.

11. Vorrichtung nach Anspruch 10, **dadurch gekennzeichnet, dass** die Zuführeinheit (4) Saugbohrungen aufweist.

12. Vorrichtung nach einem der vorangehenden Ansprüche, **dadurch gekennzeichnet, dass** zum gesteuerten Antrieb des Schiebers (38) ein Servomotor (40) vorgesehen ist.

13. Vorrichtung nach einem der vorangehenden Ansprüche, **dadurch gekennzeichnet, dass** die Zuführeinheit (4) geeignet ist, die Packgutstücke (14) in mindestens drei
parallelen Linien (16, 18, 20) bereitzustellen, und die Übergabestation mindestens drei parallele Ablagelinien (28, 30, 32) aufweist.

14. Vorrichtung nach Anspruch 13, **dadurch gekennzeichnet, dass** der Schieber (38) derart gestaltet ist, dass er die Packgutstücke (14) gleichzeitig von zwei Seiten in Richtung der Ablagelinie (30) mit den Klappen (42) verschiebt.

15. Vorrichtung nach einem der vorangehenden Ansprüche, **dadurch gekennzeichnet, dass** die Übergabestation (6) im Bereich der Ablageflächen (34) schwenkbare Rückhalteelemente (36) für die Packgutstücke (14) aufweist.

## Claims

1. Device for transferring packaged items to a packaged item transport system or to a storage device, comprising a feed unit (4) for receiving and conveying a plurality of packaged items (14), the feed unit (4) being adapted to provide the packaged items (14) in at least one line (16, 18, 20); and a transfer station (6) for short-term intermediate storage of the packaged items (14) and for transferring the packaged items (14) to a packaged item transport system or to a storage device, the transfer station (6) comprising a deposit line (30) having a plurality of deposit surfaces (34) for receiving the packaged items (14) provided by the feed unit (4), the deposit surfaces (34) comprising flaps (42) which are to be opened; **characterised in that** the transfer station (6) comprises at least one further deposit line (28, 32) for receiving the packaged items (14) provided by the feed unit (4), a pusher (38) being arranged in the transfer station (6) and being adapted to displace the packaged items (14) in the direction of the deposit line (30) which is provided with the flaps (42).

2. Device according to claim 1, **characterised in that** each deposit surface (34) comprises two flaps (42) which open in opposite directions.

3. Device according to claim 2, **characterised in that** the flaps (42) open in the direction of the narrower sides of the deposit surfaces (34).

4. Device according to any one of the preceding claims, **characterised in that** a servomotor (44) is provided for driving all of the flaps (42) in a controlled manner.

5. Device according to any one of the preceding claims, **characterised in that** the deposit surfaces (34) having the flaps (42) are positioned lower than the deposit surfaces (34) of the other deposit lines (28, 32).

6. Device according to any one of the preceding claims, **characterised in that** the feed unit (4) is adapted to provide the packaged items (14) in at least two parallel lines (16, 18, 20), but mutually offset in the individual lines (16, 18, 20).

7. Device according to any one of the preceding claims, **characterised in that** upstream from the feed unit (4) an output device (2) is provided which provides the packaged items (14) individually and in at least one row perpendicular to the conveying direction of the feed unit (4).

8. Device according to any one of the preceding claims, **characterised in that** the feed unit (4) comprises at least one peripheral vacuum belt (10).

9. Device according to claim 8, **characterised in that** the feed unit (4) comprises a plurality of vacuum grippers (8) for receiving the packaged items (14) and for transferring them to the at least one vacuum belt (10).

10. Device according to either claim 8 or claim 9, **characterised in that** the feed unit (4) comprises at least two combinations of one stopper (22) and one kicker (24), each combination being allocated to one line (16, 18, 20).

11. Device according to claim 10, **characterised in that** the feed unit (4) comprises vacuum holes.

12. Device according to any one of the preceding claims, **characterised in that** a servomotor (40) is provided for driving the pusher (38) in a controlled manner.

13. Device according to any one of the preceding claims, **characterised in that** the feed unit (4) is adapted for providing the packaged items (14) in at least three parallel lines (16, 18, 20) and the transfer station comprises at least three parallel deposit lines (28, 30, 32).

14. Device according to claim 13, **characterised in that** the pusher (38) is formed in such a way as to displace the packaged items (14) in the direction of the deposit line (30) comprising the flaps (42) from two sides simultaneously.

15. Device according to any one of the preceding claims, **characterised in that** the transfer station (6) comprises pivotable retention members (36) for the packaged items (14) in the region of the deposit surfaces (34).

## Revendications

1. Dispositif pour le transfert de marchandises emballées sur un système de transport de marchandises emballées ou sur un dispositif de stockage, comprenant
une unité d'amenée (4) pour la réception et le transport de plusieurs pièces de marchandises emballées (14), l'unité d'amenée (4) étant propre à mettre à disposition les pièces de marchandises emballées (14) en au moins une ligne (16, 18, 20) ; et
un poste de transfert (6) qui sert au stockage provisoire à court terme des pièces de marchandises emballées (14) et au transfert des pièces de marchandises emballées (14) sur un système de transport de marchandises emballées ou sur un dispositif de stockage, le poste de transfert (6) présentant une ligne de dépôt (30) dotée de plusieurs surfaces de dépôt (34) pour la réception des pièces de marchandises emballées (14) mises à disposition par l'unité d'alimentation (4), les surfaces de dépôt (34) présentant des volets à ouvrir (42) ;
**caractérisé en ce que**
le poste de transfert (6) présente au moins une autre ligne de dépôt (28, 32) pour la réception des pièces de marchandises emballées (14) mises à disposition par l'unité d'amenée (4), un tiroir (38) étant disposé dans le poste de transfert (6), lequel sert à déplacer les pièces de marchandises emballées (14) vers la ligne de dépôt (30) équipée des volets (42).

2. Dispositif selon la revendication 1, **caractérisé en ce que** chaque surface de dépôt (34) présente deux volets (42) s'ouvrant en sens inversé.

3. Dispositif selon la revendication 2, **caractérisé en ce que** les volets (42) s'ouvrent vers les plus étroits côtés de la surface de dépôt (34).

4. Dispositif selon l'une quelconque des revendications précédentes, **caractérisé en ce qu'**un servomoteur (44) est prévu, lequel sert à l'entraînement commandé de tous les volets (42).

5. Dispositif selon l'une quelconque des revendications précédentes, **caractérisé en ce que** les surfaces de dépôt (34) avec les volets (42) se trouvent plus bas que les surfaces de dépôt (34) des autres lignes de dépôt (28, 32).

6. Dispositif selon l'une quelconque des revendications précédentes, **caractérisé en ce que** l'unité d'amenée (4) est propre à mettre à disposition les pièces de marchandises emballées (14) en au moins deux lignes parallèles (16, 18, 20) mais en déport les unes par rapport aux autres entre les lignes individuelles (16, 18, 20).

7. Dispositif selon l'une quelconque des revendications précédentes, **caractérisé en ce qu'**en amont de l'unité d'amenée (4) est prévu un dispositif de distribution (2) qui isole et met à disposition les pièces de marchandises emballées (14) en au moins une rangée perpendiculairement à la direction d'avance de l'unité d'amenée (4).

8. Dispositif selon l'une quelconque des revendications précédentes, **caractérisé en ce que** l'unité d'amenée (4) présente au moins une bande aspirante (10) tournante.

9. Dispositif selon la revendication 8, **caractérisé en ce que** l'unité d'amenée (4) présente plusieurs pinces aspirantes (8) pour la réception des pièces de marchandises emballées (14) et pour le transfert sur au moins une bande aspirante (10).

10. Dispositif selon la revendication 8 ou 9, **caractérisé en ce que** l'unité d'amenée (4) présente au moins deux combinaisons de, chacune, un dispositif d'arrêt (22) et un bras de balayage (24), une combinaison étant à chaque fois associée à une ligne (16, 18, 20).

11. Dispositif selon la revendication 10, **caractérisé en ce que** l'unité d'amenée (4) présente des perçages d'aspiration.

12. Dispositif selon l'une quelconque des revendications précédentes, **caractérisé en ce qu'**un servomoteur (40) est prévu pour l'entraînement commandé du tiroir (38).

13. Dispositif selon l'une quelconque des revendications précédentes, **caractérisé en ce que** l'unité d'amenée (4) est propre à mettre à disposition les pièces de marchandises emballées (14) en au moins trois lignes parallèles (16, 18, 20) et **en ce que** le poste de transfert présente au moins trois lignes de dépôt parallèles (28, 30, 32).

14. Dispositif selon la revendication 13, **caractérisé en ce que** le tiroir (38) est conçu de manière à déplacer les pièces de marchandises emballées (14) simultanément des deux côtés vers la ligne de dépôt (30) équipée des volets (42).

15. Dispositif selon l'une quelconque des revendications précédentes, **caractérisé en ce que** le poste de transfert (6) présente des éléments de retenue (36) pivotants dans la zone des surfaces de dépôt (34) pour les pièces de marchandises emballées (14).
